# EUROPÄISCHE PATENTSCHRIFT

(11) **EP 4 681 876 B1**
(45) Veröffentlichungstag und Bekanntmachung des Hinweises auf die Patenterteilung: **02.12.2026**
(21) Anmeldenummer: 25204845.9
(22) Anmeldetag: 19.04.2018
(51) Int. Cl.: B24B 27/00, B24B 55/06, B24B 55/10

(54) **SCHLEIFMASCHINE ZUM ROBOTERGESTÜTZTEN SCHLEIFEN**
GRINDING MACHINE FOR ROBOT-ASSISTED GRINDING
MACHINE DE MEULAGE POUR MEULAGE ASSISTÉ PAR ROBOT

(30) Priorität: 20.04.2017 DE 102017108426
(43) Veröffentlichungstag der Anmeldung: 21.01.2026
(62) Dokumentnummer(n) der früheren Anmeldung(en) nach Art. 76 EPÜ: 18719142.4 / 3 612 350
(73) Patentinhaber: FerRobotics Compliant Robot Technology GmbH, 4040 Linz (AT)
(72) Erfinder: NADERER, Ronald, 4181 Oberneukirchen (AT)
(74) Vertreter: Westphal, Mussgnug & Partner, Patentanwälte mbB

(56) Entgegenhaltungen:
- WO-A1-2016/145472
- US-B1- 6 969 310

## Beschreibung

### TECHNISCHES GEBIET

Die vorliegende Erfindung betrifft eine Schleifmaschine zum robotergestützten Schleifen, insbesondere eine kompakte und leichte Schleifmaschine zur Montage an einem Manipulator.

### HINTERGRUND

Betreffend den Stand der Technik wird auf die Publikationen WO 2016/145472 A1 und US 6 969 310 B1 verwiesen.

Die Druckschrift WO 2016/145472 offenbart eine Vorrichtung zum robotergestützten Schleifen, die einen Manipulator, eine Schleifmaschine mit einem Linearaktor aufweist, wobei die Schleifmaschine mit einem Tool Center Point (TCP) des Manipulators gekoppelt ist.

Bei robotergestützten Schleifvorrichtungen wird ein Schleifwerkzeug (z.B. eine elektrisch betriebene Schleifmaschine mit rotierender Schleifscheibe) von einem Manipulator, beispielsweise einem Industrieroboter, geführt. Dabei kann das Schleifwerkzeug auf unterschiedliche Weise mit dem sogenannten TCP *(Tool Center Point)* des Manipulators gekoppelt sein, sodass der Manipulator Position und Orientierung des Werkzeugs praktisch beliebig einstellen kann. Industrieroboter sind üblicherweise positionsgeregelt, was eine präzise Bewegung des TCP entlang einer gewünschten Trajektorie ermöglicht. Um beim robotergestützten Schleifen ein gutes Ergebnis zu erzielen ist in vielen Anwendungen eine Regelung der Prozesskraft (Schleifkraft) nötig, was mit herkömmlichen Industrierobotern oft nur schwer mit hinreichender Genauigkeit zu realisieren ist. Die großen und schweren Armsegmente eines Industrieroboters besitzen eine zu große Massenträgheit, als das ein Regler *(closed-loop controller)* rasch genug auf Schwankungen der Prozesskraft reagieren zu könnte. Um dieses Problem zu lösen, kann zwischen TCP des Manipulators und dem Schleifwerkzeug ein im Vergleich zum Industrieroboter kleiner Linearaktor angeordnet sein, der den TCP des Manipulators mit dem Schleifwerkzeug koppelt. Der Linearaktor regelt während des Schleifens lediglich die Prozesskraft (also die Anpresskraft zwischen Werkzeug und Werkstück) während der Manipulator das Schleifwerkzeug samt Linearaktor positionsgeregelt entlang einer vorgebbaren Trajektorie bewegt.

Herkömmliche Orbital- oder Exzenterschleifmaschinen sind vergleichsweise leistungsschwach, weil sie für manuelles arbeiten ausgelegt sind. Der Roboter kann schneller und somit mit mehr Kraft arbeiten und benötigt dadurch mehr Schleifleistung. Eine kleine und kompakte Bauweise kann bei Orbital- oder Exzenterschleifmaschinen jedoch thermische Probleme verursachen. Des Weiteren können die Biegekräfte von Schläuchen und Kabeln Störkräfte bewirken, die die Prozesskraft beim Schleifen verändern, jedoch vom Regler nicht eliminiert werden können.

Die Erfinder haben es sich zur Aufgabe gemacht, eine kompakte Schleifmaschine zu entwickeln, welche für robotergestütztes Schleifen geeignet ist und eine vergleichsweise genaue Regelung der Prozesskraft beim Schleifen ermöglicht.

### ZUSAMMENFASSUNG

Die oben genannte Aufgabe wird durch die Vorrichtung gemäß Anspruch 1gelöst. Unterschiedliche Ausführungsformen und Weiterentwicklungen sind Gegenstand der abhängigen Ansprüche.

Es wird eine Vorrichtung zum robotergestützten Schleifen beschrieben. Gemäß einem Ausführungsbeispiel weist die Vorrichtung folgendes auf: einen Manipulator; eine Schleifmaschine; einen Linearaktor, der die Schleifmaschine mit einem TCP des Manipulators koppelt; eine Absauganlage, welche mit dem Auslass im Gehäuse der Schleifmaschine verbunden ist. Die Absauganlage ist dabei mit einem Auslass an der Schleifmaschine über einen Schlauch verbunden, der annähernd spiralförmig um das Gehäuse der Schleif-maschine und den Linearaktor angeordnet ist und mit einem Ende an dem Manipulator befestigt ist.

Es wird des Weiteren eine Schleifmaschine beschrieben, die für einen robotergestütztes Schleifprozess geeignet ist. Gemäß einem Ausführungsbeispiel weist die Schleif-maschine ein Gehäuse, einen im Inneren des Gehäuses angeordneten Motor, ein an einer Motorwelle des Motors im Inneren des Gehäuses angeordnetes Lüfterrad und einen mit der Motorwelle gekoppelten Stützteller zur Aufnahme einer Schleifscheibe auf. Der Stützteller weist Öffnungen zum Ansaugen von Schleifstaub hinein ins Innere des Gehäuses auf. Die Schleifmaschine weist weiter einen in einer Wand des Gehäuses angeordneten Auslass zum Absaugen des Schleifstaubs aus dem Inneren des Gehäuses und ein in der Wand des Gehäuses angeordnetes Rückschlagventil auf. Das Rückschlagventil ermöglicht ein Austreten von Luft aus dem Inneren des Gehäuses, verhindert jedoch ein Einsaugen von Luft in das Innere des Gehäuses.

Schließlich wird ein Verfahren zum Kühlen einer Schleifmaschine mit einem rotierbaren Stützteller zur Aufnahme einer Schleifscheibe beschrieben. Gemäß einem Ausführungsbeispiel umfasst das das Erzeugen eines Unterdruckes im Inneren des Gehäuses der Schleifmaschine mittels einer Absauganlage, die über einen Luftauslass in einer Gehäusewand mit dem Inneren des Gehäuses verbunden ist. Dabei wird durch den Unterdruck ein Luftstrom durch Öffnungen im Stützteller erzeugt, welcher Schleifstaub ins Innere des Gehäuses transportiert. Dieser wird dann über den Auslass in der Gehäusewand abgesaugt. Gleichzeitig wird durch den Luftstrom auch ein im Inneren des Gehäuses angeordneter Motor gekühlt. Im Falle einer inaktiven Absauganlage umfasst das Verfahren das Erzeugen eines weiteren Luftstromes zur Kühlung des Motors durch die Öffnungen im Stützteller mittels eines Lüfterrades, wodurch im Inneren des Gehäuses ein Staudruck erzeugt wird, sodass ein in der Gehäusewand angeordnetes Rückschlagventil öffnet und der weitere Luftstrom austreten kann.

### KURZE BESCHREBIBUNG DER ZEICHNUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
Figur 1 zeigt schematisch ein Beispiel einer robotergestützten Schleifvorrichtung.
Figur 2 zeigt ein schematisches Beispiel einer Orbitalschleifmaschine mit kombinierter Luftkühlung und Absaugung.
Figur 3 zeigt das Beispiel aus Fig. 2 in einer Situation mit inaktiver Absaugungsanlage.
Figur 4 zeigt die rotierende Auflage (Stützteller) mit Öffnungen aus Fig. 2 in einer Ansicht von unten.
Figuren 5A und 5B, zusammen Fig. 5, zeigen ein Beispiel einer Kabelführung an einer robotergestützten Schleifvorrichtung.

### DETAILLIERTE BESCHREIBUNG

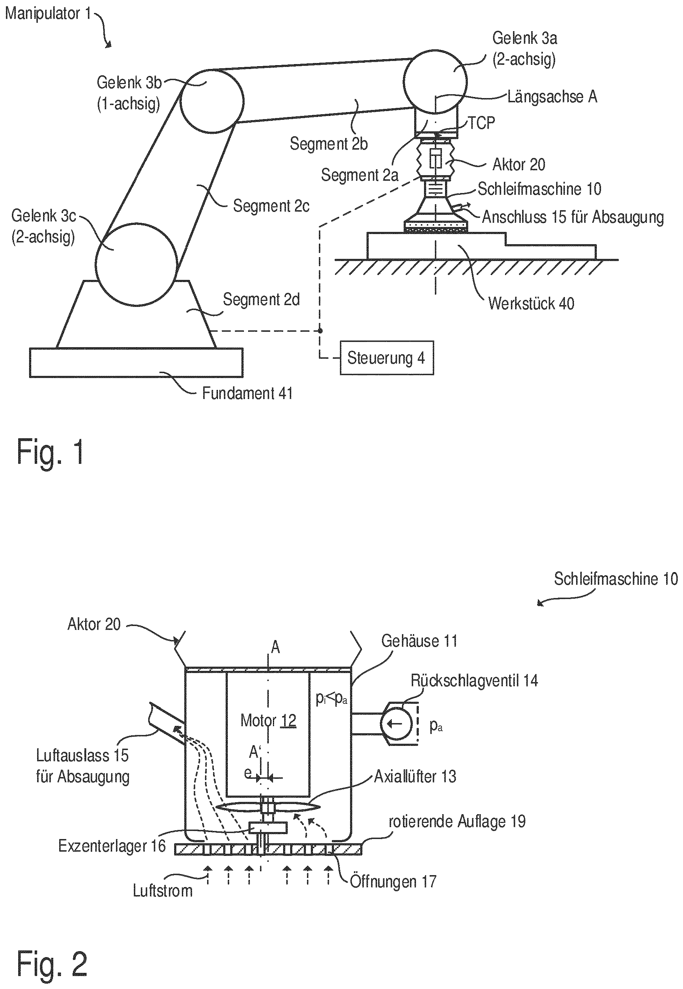

Bevor verschiedene Ausführungsbeispiele der vorliegenden Erfindung im Detail erläutert werden, wird zunächst ein Beispiel einer robotergestützten Schleifvorrichtung beschrieben. Diese umfasst einen Manipulator 1, beispielsweise einen Industrieroboter und eine Schleifmaschine 10 mit rotierendem Schleifwerkzeug (z.B. eine Orbitalschleifmaschine), wobei dieses mit dem sogenannten *Tool-Center-Point* (TCP) des Manipulators 1 über einen Linearaktor 20 gekoppelt ist. Im Falle eines Industrieroboters mit sechs Freiheitsgraden kann der Manipulator aus vier Segmenten 2a, 2b, 2c und 2d aufgebaut sein, die jeweils über Gelenke 3a, 3b und 3c verbunden sind. Das erste Segment ist dabei meist starr mit einem Fundament 41 verbunden (was jedoch nicht zwangsläufig der Fall sein muss). Das Gelenk 3c verbindet die Segmente 2c und 2d. Das Gelenk 3c kann 2-achsig sein und eine Drehung des Segments 2c um eine horizontale Drehachse (Elevationswinkel) und eine vertikale Drehachse (Azimutwinkel) ermöglichen. Das Gelenk 3b verbindet die Segmente 2b und 2c und ermöglicht eine Schwenkbewegung des Segments 2b relativ zur Lage des Segments 2c. Das Gelenk 3a verbindet die Segmente 2a und 2b. Das Gelenk 3a kann 2-achsig sein und daher (ähnlich wie das Gelenk 3c) eine Schwenkbewegung in zwei Richtungen ermöglichen. Der TCP hat eine feste Relativposition zum Segment 2a, wobei dieses üblicherweise noch ein Drehgelenk (nicht dargestellt) umfasst, dass eine Drehbewegung um eine Längsachse A des Segments 2a ermöglicht (in Fig. 1 als strichpunktierte Line eingezeichnet, entspricht der Drehachse des Schleifwerkzeugs). Jeder Achse eines Gelenks ist ein Aktor zugeordnet, der eine Drehbewegung um die jeweilige Gelenksachse bewirken kann. Die Aktoren in den Gelenken werden von einer Robotersteuerung 4 gemäß einem Roboterprogramm angesteuert.

Der Manipulator 1 ist üblicherweise positionsgeregelt, d.h. die Robotersteuerung kann die Pose (Ort und Orientierung) des TCP festlegen und diesen entlang einer vordefinierten Trajektorie bewegen. In Fig. 1 ist die Längsachse des Segments 2a, auf der der TCP liegt mit A bezeichnet. Wenn der Aktor 20 an einem Endanschlag anliegt, ist mit der Pose des TCP auch die Pose des Schleifwerkzeugs definiert. Wie eingangs bereits erwähnt, dient der Aktor 20 dazu, während des Schleifprozesses die Kontaktkraft (Prozesskraft) zwischen Werkzeug (Schleifmaschine 10) und Werkstück 40 auf einen gewünschten Wert einzustellen. Eine direkte Kraftregelung durch den Manipulator 1 ist für Schleifanwendungen in der Regel zu ungenau, da durch die hohe Massenträgheit der Segmente 2a-c des Manipulators 1 eine schnelle Kompensation von Kraftspitzen (z.B. beim Aufsetzen des Schleifwerkzeugs auf das Werkstück 40) mit herkömmlichen Manipulatoren praktisch nicht möglich ist. Aus diesem Grund ist die Robotersteuerung dazu ausgebildet, die Pose des TCP des Manipulators zu regeln, während die Kraftregelung ausschließlich vom Aktor 20 bewerkstelligt wird.

Wie bereits erwähnt, kann während des Schleifprozesses die Kontaktkraft F_{K} (auch als Prozesskraft bezeichnet) zwischen Werkzeug (Schleifmaschine 10) und Werkstück 40 mit Hilfe des (Linear-) Aktors 20 und einer Kraftregelung (die beispielsweise in der Steuerung 4 implementiert sein kann) so eingestellt werden, dass die Kontaktkraft (in Richtung der Längsachse A) zwischen Schleifwerkzeug und Werkstück 40 einem vorgebbaren Sollwert entspricht. Die Kontaktkraft ist dabei eine Reaktion auf die Aktorkraft, mit der der Linearaktor 20 auf die Werkstückoberfläche drückt. Bei fehlendem Kontakt zwischen Werkstück 40 und Werkzeug fährt der Aktor 20 aufgrund der fehlenden Kontaktkraft am Werkstück 40 gegen einen Endanschlag (nicht dargestellt da im Aktor 20 integriert). Die Positionsregelung des Manipulators 1 (die ebenfalls in der Steuerung 4 implementiert sein kann) kann vollkommen unabhängig von der Kraftregelung des Aktors 20 arbeiten. Der Aktor 20 ist nicht verantwortlich für die Positionierung der Schleifmaschine 10, sondern lediglich für das Einstellen und Aufrechterhalten der erwünschten Kontaktkraft während des Schleifprozesses und zur Erkennung von Kontakt zwischen Werkzeug und Werkstück.

Der Aktor kann ein pneumatischer Aktor sein, z.B. ein doppeltwirkender Pneumatikzylinder. Jedoch sind auch andere pneumatische Aktoren anwendbar wie z.B. Balgzylinder und Luftmuskel. Als Alternative kommen auch elektrische Direktantriebe (getriebelos) in Betracht. Es sei angemerkt, dass die Wirkrichtung des Aktors 20 nicht notwendigerweise mit der Längsachse A des Segments 2a des Manipulators zusammenfallen muss. Im Falle eines pneumatischen Aktors kann die Kraftregelung in an sich bekannter Weise mit Hilfe eines Regelventils, eines Reglers (implementiert in der Steuerung 4) und eines Druckluftspeichers realisiert werden. Die konkrete Implementierung ist jedoch für die weitere Erläuterung nicht wichtig und wird daher auch nicht detaillierter beschrieben. Schleifmaschinen weisen in der Regel eine Absaugung auf, um Schleifstaub abzusaugen. In Fig. 1 ist ein Anschluss 15 für einen Schlauch einer Absaugvorrichtung dargestellt. Auf diese Absaugung wird später noch detaillierter eingegangen.

Wie eingangs erwähnt kann die Massenträgheit der Schleifmaschine für eine präzise Regelung der Kontaktkraft (Prozesskraft) eine Rolle spielen. Eine kleine und kompakte Bauweise der Schleifmaschine hat jedoch größere Leistungsdichten zur Folge, was wiederum eine große Wärmeabgabe (und entsprechend hohe Temperaturen) auf vergleichsweise kleinem Raum bewirkt. Im Falle einer Orbitalschleifmaschine entsteht die Verlustwärme einerseits im Elektromotor der Schleifmaschine (z.B. ohmsche Verluste, Eisenverluste, Reibungsverluste in den Lagern) und andererseits im Exzenterlager, das die Orbitalbewegung ermöglicht. In den hier dargestellten Beispielen wird eine kompakte unter anderem dadurch erreicht, dass Kühlung und Absaugung kombiniert werden. Das heißt, im "normalen" Betrieb wird der von der Schleifstaubabsaugung bewirkte Luftstrom gleichzeitig zur Kühlung verwendet.

Figur 2 zeigt ein schematisches Beispiel einer Schleifmaschine 10 mit kombinierter Kühlung und Absaugung. Die Schleifmaschine 10 kann wie in Fig. 1 gezeigt an einem Manipulator 1 montiert sein, um einen robotergestützten Schleifprozess zu ermöglichen. Fig. 2 ist ein schematischer Längsschnitt entlang einer Längsachse A der Schleifmaschine 10 (kann mit der Achse des Segments 2a zusammenfallen, vgl. Fig. 1). Die Schleifmaschine 10 umfasst ein Gehäuse 11, welches eine im Wesentlichen zylindrische Grundform haben kann (jedoch nicht haben muss). In dem Gehäuse 11 ist ein Elektromotor 12 angeordnet. Die Drehachse der Motorwelle des Motors 12 entspricht auch der Längsachse A der Schleifmaschine 10. Im vorliegenden Beispiel ist die Motorwelle ist über ein Exzenterlager 16 mit einer rotierenden Auflage 19 (Stützteller, *backing pad*) gekoppelt, an der im Betrieb eine Schleifscheibe befestigt ist. Beispielsweise kann die Schleifscheibe mittels eines Klettverschlusses *(Velcro, hook-and-loopfastener*) an der rotierenden Auflage befestigt sein. Das Exzenterlager 16 ermöglicht eine Rotation der rotierenden Auflage um eine exzentrische Drehachse A', welche um die Längsachse A rotiert. Der axiale Versatz zwischen der Motorwelle (Drehachse A) und der exzentrischen Welle (Drehachse A') ist in Fig. 2 mit e bezeichnet. Der prinzipielle Aufbau des Antriebs der rotierenden Auflage 19 ist an sich bekannt und wird daher nicht detaillierter erläutert.

Wie erwähnt können Schleifmaschinen, insbesondere Orbitalschleifmaschinen, mit einer Absauganlage zur Absaugung von Schleifstaub gekoppelt sein. Die Absauganlage erzeugt - ähnlich einem Staubsauger - einen Unterdruck und ist mittels eines Schlauchs mit dem Inneren des Gehäuses 11 gekoppelt. Im vorliegenden Beispiel kann der Schlauch der Absauganlage an dem Luftauslass 15 angeschlossen sein. Während des Schleifbetriebs wird durch Öffnungen 17 in der rotierenden Auflage 19 Luft eingesaugt, wobei Staubteilchen von dem Luftstrom durch die Öffnungen 17 ins Innere des Gehäuses 11 transportiert und schließlich durch den Luftauslass 15 abgesaugt werden. Der Luftstrom durch das Gehäuse 11 ist in Fig. 2 durch die gestrichelten Pfeile dargestellt. Aufgrund des von der Absauganlage erzeugten Unterdrucks im Inneren des Gehäuses (Druck pᵢ im Inneren ist kleiner als der Umgebungsdruck pₐ) ist das in Fig. 2 dargestellte Rückschlagventil 14 geschlossen, welches das Innere des Gehäuses 11 mit der Umgebung verbindet. In der dargestellten Situation mit aktivierter Absaugung und geschlossenem Rückschlagventil 14 ist der an der Motorwelle befestigte Axiallüfter 13 eigentlich redundant und verstärkt den von der Absauganlage bewirkten Luftstrom.

Der von der Absaugung verursache Luftstrom kühlt gleichzeitig das Innere des Gehäuses und transportiert Wärme vom Motor 12 und dem Exzenterlager 16 ab. Aufgrund der kompakten Bauweise ist diese Kühlung notwendig, um ein Überhitzen der Schleifmaschine zu verhindern. Ohne Kühlung könnten Temperaturen von über 150° Schäden am Motor oder den mechanischen Komponenten verursachen. Nun besteht im Betrieb die Gefahr, dass die Absauganlage aus irgendeinem Grund nicht ordnungsgemäß funktioniert, beispielsweise weil ein Arbeiter vergisst, die Absauganlage einzuschalten, oder weil ein Luftschlauch sich gelöst hat, etc. Bei herkömmlichen Schleifmaschinen ist das in der Regel unproblematisch, weil einerseits aufgrund der weniger kompakten Bauweise die Abwärme geringer ist und andererseits Absaugung und Kühlung zwei voneinander unabhängige Subsysteme sind. Die hier beschriebene kompakte Bauweise der Schleifmaschine mit kombinierter Kühlung und Absaugung hängt jedoch von einer funktionierenden Absaugung ab, wenn nicht weitere Maßnahmen getroffen werden, die eine Überhitzung der Schleifmaschine verhindern, wenn die Absaugung nicht funktioniert. Wenn die Absaugung ausfällt ist der Axiallüfter 13 nicht immer in der Lage, eine ausreichende Konvektion zu erzeugen, insbesondere dann, wenn der Strömungswiderstand durch den Luftauslass 15 zu hoch ist. Das kann z.B. in Situationen der Fall sein, in denen die Absauganlage über einen Schlauch mit dem Luftauslass 15 verbunden ist, die Absauganlage jedoch ausgeschaltet oder ausgefallen ist.

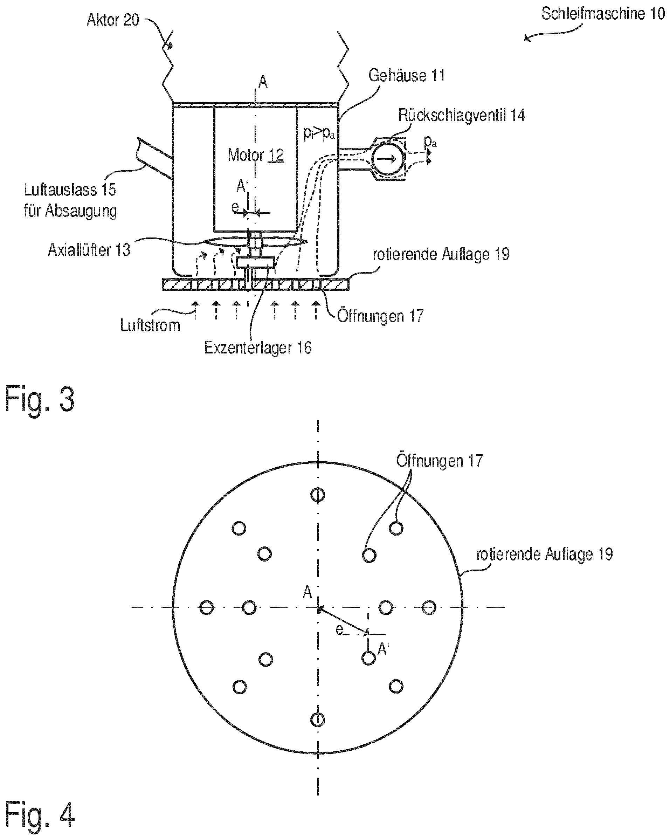

Figur 3 zeigt das Beispiel aus Fig. 2 in einer Situation mit inaktiver Absaugungsanlage. Um dennoch eine Überhitzung der Schleifmaschine 10 zu verhindern ist an der Motorwelle des Motors 12 ein (für den normalen Betrieb mit Absaugung eigentlich redundanter) Axiallüfter (Lüfterrad, Propeller) montiert, der zum Zwecke der Kühlung einen Luftstrom durch das Innere des Gehäuses erzeugen kann. Wie in Fig. 3 dargestellt saugt der Axiallüfter ebenfalls Luft durch die Öffnungen 17 an und erzeugt einen Luftstrom zur Kühlung des Inneren des Gehäuses 11. Wie erwähnt, können Situationen auftreten, in denen nicht gewährleistet ist, dass der vom Axiallüfter 12 erzeugte Luftstrom über den Auslass 15 nach außen geblasen werden kann. Wenn an dem Auslass 15 beispielsweise noch ein Schlauch befestigt ist, kann der Luftwiderstand des Schlauches so groß sein, dass der Axiallüfter 12 nicht genug Volumenstrom erzeugen kann, um das Innere des Gehäuses ausreichend zu kühlen. Aus diesem Grund weist die in Fig. 2 und 3 dargestellte Schleifmaschine ein Rückschlagventil 14 auf, welches ein Ausströmen von Luft aus dem Inneren des Gehäuses 11 in die Umgebung ermöglicht. Bei inaktiver Absauganlage erzeugt der Axiallüfter einen Innendruck pᵢ (Staudruck) im Gehäuse, der größer ist als der Umgebungsdruck pₐ. Folglich öffnet sich das Rückschlagventil und Luft kann bei vergleichsweise geringem Luftwiderstand über das Rückschlagventil 14 aus dem Gehäuse entweichen und dabei Wärme abführen. Bei Maschinen ohne separater (von der Absaugung unabhängiger) Kühlung ist demnach der Axiallüfter 13 - in Kombination mit dem Rückschlagventil 14 - ein Sicherheitsmerkmal, das eine Überhitzung des Motors verhindert, wenn die Absauganlage keinen ausreichenden Luftstrom für die Kühlung des Motors erzeugt. Der Axiallüfter kann (muss aber nicht) der einzige Lüfter im Gehäuse 11 sein. An dieser Stelle sei nochmal betont, dass im "normalen" Betrieb bei aktiver Absaugung der den Motor kühlende Luftstrom von der Absaugung erzeugt wird.

Figur 4 zeigt die rotierende Auflage 19 (Stützteller) mit Öffnungen 17 in einer Ansicht von unten. Wie erwähnt kann die Oberfläche der Auflage 19 haftend sein (z.B. mittels eines Klettverrschlusses), um eine Schleifscheibe daran zu befestigen. In Fig. 4 sind auch die Drehachse A der Motorwelle und die exzentrische Drehachse A' der Auflage 19 gezeigt. Es sei angemerkt, dass die hier beschriebenen Ausführungsbeispiele nicht auf Orbitalschleifmaschinen beschränkt sind. Die mit Bezug auf Fig. 2 und 3 beschriebene Kombinierte Kühlung und Absaugung ist auch auf andere Schleifmaschinen mit rotierendem Schleifwerkzeug (Schleifscheibe) anwendbar, auch wenn das Schleifwerkzeug eine reine Drehbewegung statt einer Orbitalbewegung ausführt.

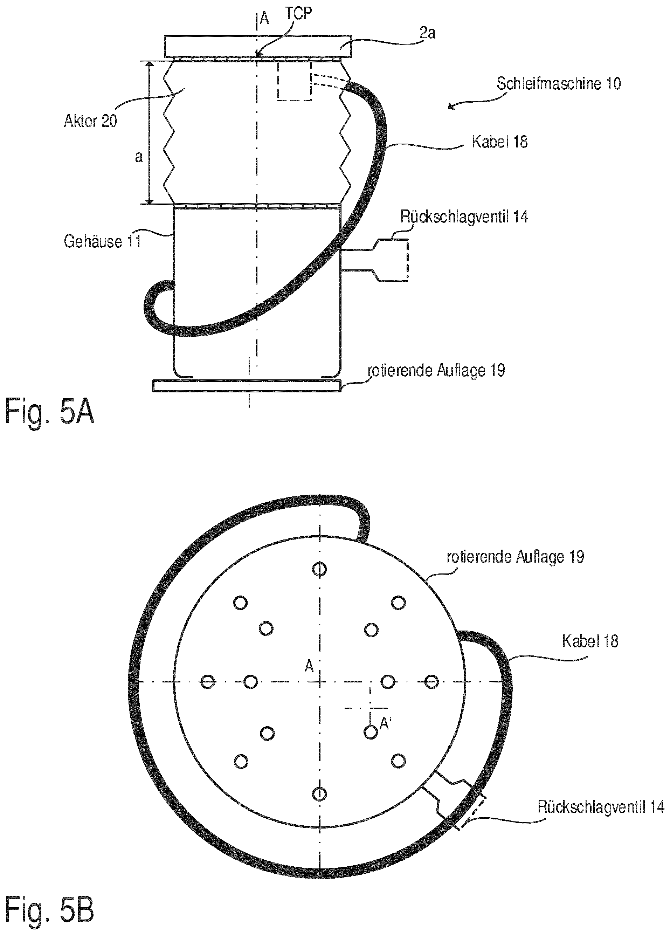

Wie eingangs erwähnt kann eine kompakte und leichte Bauweise der Schleifmaschine helfen, Massenträgheitskräfte zu verringern und die Regelung der Kontaktkraft zu verbessern. Ein weiterer Aspekt, der bei der Regelung der Kontaktkraft eine Rolle spielen kann, sind Störkräfte, welche durch eine Biegung von Kabel und Schläuche verursacht werden. Diese Störkräfte wirken parallel zum Aktor 20 (zwischen Schleifmaschine 10 und TCP des Manipulators 1) und können daher nicht ohne weiteres vom Aktor kompensiert werden. Die Figuren 5A und 5B zeigen ein Beispiel einer Kabelführung an einer robotergestützten Schleifvorrichtung mit Schleifmaschine 10 und Aktor 20, wobei die für den Betrieb der Schleifmaschine benötigten Kabel (elektrischen Leitungen) annähernd entlang einer spiralförmigen Kurve um die Längsachse A herum geführt sind. Fig. 5A ist eine schematische Ansicht von vorne und Fig. 5B eine schematische Ansicht von unten.

Die Führung des Kabels/der Kabel 18 entlang einer annähernd spiralförmigen Kurve (zumindest teilweise) um die Schleifmaschine 10 und den Aktor 20 herum bewirkt, dass bei einer Veränderung der Auslenkung *a* des Aktors 20 sich die Durchbiegung des Kabels 18 möglichst wenig ändern. Des Weiteren ermöglicht die spiralförmige Kabelführung allgemein sehr niedrige Störkräfte entlang der Längsachse A (d.h, entlang der Wirkrichtung des Aktors) aufgrund der Biegung der Kabel 18. Im Vergleich dazu sind bei einer konventionellen Kabelführung, bei der das Kabel 18 (bzw. die Kabel) an einer Seite des Aktors 20 zu einer Schlaufe gebogen wird (werden), die Störkräfte wesentlich größer und stärker veränderlich.

Der am Auslass 15 (siehe Fig. 3) angeschlossene Schlauch (nicht dargestellt), durch den der Schleifstaub abgesaugt wird, kann in ähnlicher Weise entlang einer spiralförmigen Kurve geführt werden, wie das (die) Kabel 18. Mehrere Kabel 18 können zusammen in einem Kabelschlauch geführt werden. Wie in Fig. 5 dargestellt ist ein Ende des Kabels 18 mit der Schleifmaschine 10 verbunden (und durch eine Wand des Gehäuses 11 durchgeführt), wohingegen das andere Ende des Kabels 18 mechanisch mit dem äußersten Segment 2a des Manipulators 1 verbunden ist.

Im Folgenden werden einige wichtige Aspekte der hier beschriebenen Ausführungsbeispiele zusammengefasst. Das folgende ist jedoch nicht als vollständige, sondern lediglich als exemplarische Aufzählung zu verstehen. Ein Ausführungsbeispiel betifft eine Schleifmaschine 10, die für einen robotergestütztes Schleifprozess geeignet ist (vgl. Fig. 2). Die Schleifmaschine weist ein Gehäuse 11, einen im Inneren des Gehäuses angeordneten Motor 12, ein an einer Motorwelle des Motors 12 im Inneren des Gehäuses angeordnetes Lüfterrad 13 und eine mit der Motorwelle 12 gekoppelten rotierbare Aufnahme 19 (Stützteller) zur Aufnahme einer Schleifscheibe auf. Der Stützteller hat Öffnungen 17 zum Ansaugen von Schleifstaub hinein ins Innere des Gehäuses 11 auf. Die Schleifmaschine 10 weist weiter einen in einer Wand des Gehäuses angeordneten Auslass 15 zum Absaugen des Schleifstaubs aus dem Inneren des Gehäuses 11 und ein in der Wand des Gehäuses 11 angeordnetes Rückschlagventil 14 auf. Das Rückschlagventil 14 ermöglicht ein Austreten von Luft aus dem Inneren des Gehäuses, verhindert jedoch ein Einsaugen von Luft in das Innere des Gehäuses (vgl. Fig. 2 und 3).

In einem Ausführungsbeispiel ist der Motor 12 derart im Innenraum des Gehäuses 11 angeordnet, dass der Luftstrom von den Öffnungen 17 im Stützteller 19 hin zum Auslass 15, mit dem der Schleifstaub abtransportiert wird, auch den Motor 12 kühlt. Der für die Absaugung erzeugte Luftstrom wird also auch für die Kühlung des Motors verwendet. Im Falle eines Orbitalschleifers weist die Schleifmaschine ein Exzenterlager 16 auf, welches die Motorwelle mit dem Stützteller 19 verbindet, sodass der Stützteller 19 eine Orbitalbewegung durchführen kann. Der erwähnte Luftstrom von den Öffnungen 17 im Stützteller 19 hin zum Auslass 15, mit dem der Schleifstaub abtransportiert wird, kühlt dabei auch das Exzenterlager 16.

Im Falle fehlender Absaugung durch den Auslass 15 tritt Luft, die mittels des Lüfterrades 13 durch die Öffnungen 17 im Stützteller 19 angesaugt wird, durch das Rückschlagventil 14 aus (siehe Fig. 3). In anderen Worten, das Lüfterrad 13 bewirkt einen Staudruck im Inneren des Gehäuses 11, sodass Luft aus Inneren des Gehäuses 11 durch das Rückschlagventil 14 in die Umgebung austreten kann.

Um die Störkräfte aufgrund mit der Schleifmaschine verbundener Kabel und Schläuche zu reduzieren, kann ein Kabel 18 zur Stromversorgung des Motors 12 annähernd spiralförmig um das Gehäuse 11 herumgeführt werden.

Ein weiterer Aspekt betrifft eine Vorrichtung zum robotergestützten Schleifen mit einen Manipulator 1 (z.B. ein Industrieroboter), eine Schleifmaschine 10 gemäß den hier beschriebenen Beispielen, einen Linearaktor 20, der die Schleifmaschine 10 mit einem TCP des Manipulators 1 koppelt, und eine Absauganlage, welche mit einem Auslass im Gehäuse der Schleifmaschine verbunden ist (vgl. Fig. 1 und 2). Ein weiterer Aspekt betrifft ein Verfahren zum Kühlen einer Schleifmaschine 10 mit einem rotierbaren Stützteller 19 zur Aufnahme einer Schleifscheibe. Das Verfahren umfasst das Erzeugen eines Unterdruckes im Inneren des Gehäuses 11 der Schleifmaschine 10 mittels einer Absauganlage, die über einen Luftauslass 15 in einer Gehäusewand mit dem Inneren des Gehäuses verbunden ist (siehe Fig. 2 und 3). Dabei wird durch den Unterdruck ein Luftstrom durch Öffnungen 17 im Stützteller 19 erzeugt, welcher Schleifstaub ins Innere des Gehäuses 11 transportiert. Dieser wird dann über den Auslass 15 in der Gehäusewand abgesaugt. Gleichzeitig wird durch den Luftstrom auch ein im Inneren des Gehäuses angeordneter Motor gekühlt. Im Falle einer inaktiven Absauganlage umfasst das Verfahren das Erzeugen eines weiteren Luftstromes zur Kühlung des Motors 12 durch die Öffnungen 17 im Stützteller 19 mittels eines Lüfterrades 13, wodurch im Inneren des Gehäuses 11 ein Staudruck erzeugt wird, sodass ein in der Gehäusewand angeordnetes Rückschlagventil 14 öffnet und der weitere Luftstrom austreten kann.

## Patentansprüche

1. Eine Vorrichtung zum robotergestützten Schleifen, die aufweist:
einen Manipulator (1);
eine Schleifmaschine (10);
einen Linearaktor (20), der die Schleifmaschine mit einem TCP des Manipulators koppelt; wobei die Vorrichtung **gekennzeichnet ist durch**
eine Absauganlage; und
einen Schlauch, welcher die Absauganlage mit einem Auslass (15) des Gehäuses (11) der Schleifmaschine (10) verbindet,
wobei der Schlauch annähernd spiralförmig um das Gehäuse (11) der Schleifmaschine (10) und den Linearaktor (20) herumgeführt ist und ein Ende des Schlauchs an dem Manipulator (1) befestigt ist.

2. Die Vorrichtung gemäß Anspruch 1, wobei die Schleifmaschine (10) aufweist:
einen im Inneren des Gehäuses (11) angeordneten Motor (12);
ein an einer Motorwelle des Motors (12) im Inneren des Gehäuses (11) angeordnetes Lüfterrad (13);
einen mit der Motorwelle gekoppelten Stützteller (19) zur Aufnahme einer Schleifscheibe, wobei der Stützteller (19) Öffnungen (17) zum Ansaugen von Schleifstaub in das Innere des Gehäuses (11) aufweist; und
ein in einer Wand des Gehäuses (11) angeordnetes Rückschlagventil (14), welches ein Austreten von Luft aus dem Inneren des Gehäuses (11) ermöglicht, ein Einsaugen von Luft in das Innere des Gehäuses (11) jedoch verhindert,
wobei der Auslass (15) in einer Wand des Gehäuses (11) angeordnet ist und zum Absaugen des Schleifstaubs aus dem Inneren des Gehäuses (11) ausgebildet ist.

3. Die Vorrichtung gemäß Anspruch 2,
wobei der Motor (12) derart im Innenraum des Gehäuses (11) angeordnet ist, dass der Luftstrom von den Öffnungen (17) im Stützteller (19) hin zum Auslass (15), über den der Schleifstaub abtransportiert wird, auch den Motor (12) kühlt.

4. Die Vorrichtung gemäß Anspruch 2 oder 3, wobei die Schleifmaschine (10) weiter aufweist:
ein Exzenterlager (16), welches die Motorwelle mit dem Stützteller (19) verbindet, sodass der Stützteller (19) eine Orbitalbewegung durchführen kann,
wobei der Luftstrom von den Öffnungen (17) im Stützteller (19) hin zum Auslass (15), über den der Schleifstaub abtransportiert wird, das Exzenterlager (16) kühlt.

5. Die Vorrichtung gemäß einem der Ansprüche 2 bis 4,
bei der - im Falle fehlender Absaugung durch den Auslass (15) - mittels des Lüfterrades (13) durch die Öffnungen (17) im Stützteller (19) angesaugte Luft durch das Rückschlagventil (14) austritt.

6. Die Vorrichtung gemäß Anspruch 5,
wobei - im Falle fehlender Absaugung - das Lüfterrad (13) einen Staudruck im Inneren des Gehäuses (11) bewirkt, sodass Luft aus dem Inneren des Gehäuses (11) durch das Rückschlagventil (14) in die Umgebung austreten kann.

7. Die Vorrichtung gemäß einem der Ansprüche 1 bis 6, die weiter aufweist:
ein Kabel (18) für den Betrieb der Schleifmaschine (10), wobei das Kabel (18) annähernd spiralförmig um das Gehäuse (11) der Schleifmaschine (10) und den Linearaktor (20) herumgeführt ist und ein Ende des Kabels (18) mit dem Manipulator (1) verbunden ist.

8. Die Vorrichtung gemäß einem der Ansprüche 2 bis 6,
wobei die Wirkrichtung des Linearaktors (20) im Wesentlichen parallel zur Drehachse des Motors (12) verläuft.

9. Die Vorrichtung gemäß einem der Ansprüche 1 bis 6, die weiterhin aufweist:
ein Kabel (18) für den Betrieb der Schleifmaschine (10), wobei das Kabel (18) annähernd entlang einer spiralförmigen Kurve um eine Längsachse des Gehäuses (11) der Schleifmaschine (10) und des Linearaktors (20) herumgeführt ist und ein Ende des Kabels (18) mechanisch mit dem Manipulator (1) verbunden ist.

10. Die Vorrichtung gemäß Anspruch 9,
wobei das Kabel (18) zusammen mit weiteren Kabeln in einem Kabelschlauch angeordnet ist.

## Claims

1. An apparatus for robot-assisted grinding, comprising:
a manipulator (1);
a grinding machine (10);
a linear actuator (20) which couples the grinding machine to a TCP of the manipulator; the apparatus being **characterized by**:
a suction system; and
a hose which connects the suction system to an outlet (15) of the housing (11) of the grinding machine (10),
wherein the hose is routed in an approximately spiral shape around the housing (11) of the grinding machine (10) and the linear actuator (20), and one end of the hose is fastened to the manipulator (1).

2. The apparatus according to claim 1, wherein the grinding machine (10) comprises:
a motor (12) arranged inside the housing (11);
a fan impeller (13) arranged on a motor shaft of the motor (12) inside the housing (11);
a backing pad (19) coupled to the motor shaft for receiving an abrasive disc, wherein the backing pad (19) comprises openings (17) for drawing grinding dust into the interior of the housing (11); and
a check valve (14) arranged in a wall of the housing (11), which allows air to exit the interior of the housing (11) but prevents air from being drawn into the interior of the housing (11),
wherein the outlet (15) is arranged in a wall of the housing (11) and is configured to extract grinding dust from the interior of the housing (11).

3. The apparatus according to claim 2,
wherein the motor (12) is arranged in the interior of the housing (11) such that the airflow from the openings (17) in the backing pad (19) towards the outlet (15), through which the grinding dust is removed, also cools the motor (12).

4. The apparatus according to claim 2 or 3, wherein the grinding machine (10) further comprises:
an eccentric bearing (16) which connects the motor shaft to the backing pad (19) such that the backing pad (19) can perform an orbital movement,
wherein the airflow from the openings (17) in the backing pad (19) towards the outlet (15), through which the grinding dust is removed, cools the eccentric bearing (16).

5. The apparatus according to any one of claims 2 to 4,
wherein, in the absence of suction through the outlet (15), air drawn in through the openings (17) in the backing pad (19) by means of the fan impeller (13) exits through the check valve (14).

6. The apparatus according to claim 5,
wherein, in the absence of suction, the fan impeller (13) causes a buildup of pressure inside the housing (11), such that air from the interior of the housing (11) can escape through the check valve (14) into the surroundings.

7. The apparatus according to any one of claims 1 to 6, further comprising:
a cable (18) for operating the grinding machine (10), wherein the cable (18) is routed in an approximately spiral shape around the housing (11) of the grinding machine (10) and the linear actuator (20), and one end of the cable (18) is connected to the manipulator (1).

8. The apparatus according to any one of claims 2 to 6,
wherein a direction of action of the linear actuator (20) extends substantially parallel to an axis of rotation of the motor (12).

9. The apparatus according to any one of claims 1 to 6, further comprising:
a cable (18) for operating the grinding machine (10), wherein the cable (18) is routed approximately along a spiral curve around a longitudinal axis of the housing (11) of the grinding machine (10) and of the linear actuator (20), and one end of the cable (18) is mechanically connected to the manipulator (1).

10. The apparatus according to claim 9,
wherein the cable (18), together with further cables, is arranged in a cable sleeve.

## Revendications

1. Un dispositif destiné au meulage assisté par robot, comprenant :
un manipulateur (1) ;
une machine de meulage (10) ;
un actionneur linéaire (20) qui couple la machine de meulage à un TCP du manipulateur ; le dispositif étant **caractérisé par** :
un système d'aspiration ; et
un tuyau qui relie le système d'aspiration à une sortie (15) du boîtier (11) de la machine de meulage (10),
le tuyau étant acheminé selon un trajet approximativement en spirale autour du boîtier (11) de la machine de meulage (10) et de l'actionneur linéaire (20), et une extrémité du tuyau étant fixée au manipulateur (1).

2. Le dispositif selon la revendication 1, la machine de meulage (10) comprenant :
un moteur (12) disposé à l'intérieur du boîtier (11) ;
une roue de ventilateur (13) disposée sur un arbre du moteur (12) à l'intérieur du boîtier (11) ;
un plateau-support (19) couplé à l'arbre du moteur pour recevoir un disque abrasif, le plateau-support (19) présentant des ouvertures (17) destinées à aspirer de la poussière de meulage vers l'intérieur du boîtier (11) ; et
un clapet anti-retour (14) disposé dans une paroi du boîtier (11), qui permet à de l'air de sortir de l'intérieur du boîtier (11), mais empêche de l'air d'être aspiré vers l'intérieur du boîtier (11),
la sortie (15) étant disposée dans une paroi du boîtier (11) et étant configurée pour extraire par aspiration la poussière de meulage de l'intérieur du boîtier (11).

3. Le dispositif selon la revendication 2,
dans lequel le moteur (12) est disposé à l'intérieur du boîtier (11) de telle manière que le flux d'air allant des ouvertures (17) du plateau-support (19) vers la sortie (15), par laquelle la poussière de meulage est évacuée, refroidit également le moteur (12).

4. Le dispositif selon la revendication 2 ou 3, dans lequel la machine de meulage (10) comprend en outre :
un palier excentrique (16) qui relie l'arbre du moteur au plateau-support (19), de sorte que le plateau-support (19) peut effectuer un mouvement orbital,
dans lequel le flux d'air allant des ouvertures (17) du plateau-support (19) vers la sortie (15), par laquelle la poussière de meulage est évacuée, refroidit le palier excentrique (16).

5. Le dispositif selon l'une quelconque des revendications 2 à 4,
dans lequel, en l'absence d'aspiration par la sortie (15), l'air aspiré à travers les ouvertures (17) du plateau-support (19) au moyen de la roue de ventilateur (13) sort par le clapet anti-retour (14).

6. Le dispositif selon la revendication 5,
dans lequel, en l'absence d'aspiration, la roue de ventilateur (13) provoque une surpression à l'intérieur du boîtier (11), de sorte que de l'air provenant de l'intérieur du boîtier (11) peut sortir vers le milieu environnant à travers le clapet anti-retour (14).

7. Le dispositif selon l'une quelconque des revendications 1 à 6, comprenant en outre :
un câble (18) destiné au fonctionnement de la machine de meulage (10), le câble (18) étant acheminé selon un trajet approximativement en spirale autour du boîtier (11) de la machine de meulage (10) et de l'actionneur linéaire (20), et une extrémité du câble (18) étant reliée au manipulateur (1).

8. Le dispositif selon l'une quelconque des revendications 2 à 6,
dans lequel la direction d'action de l'actionneur linéaire (20) est sensiblement parallèle à l'axe de rotation du moteur (12).

9. Le dispositif selon l'une quelconque des revendications 1 à 6, comprenant en outre :
un câble (18) destiné au fonctionnement de la machine de meulage (10), le câble (18) étant acheminé approximativement le long d'une courbe en spirale autour d'un axe longitudinal du boîtier (11) de la machine de meulage (10) et de l'actionneur linéaire (20), et une extrémité du câble (18) étant reliée mécaniquement au manipulateur (1).

10. Le dispositif selon la revendication 9,
dans lequel le câble (18) est disposé avec d'autres câbles dans une gaine de câbles.
